# EUROPÄISCHE PATENTSCHRIFT

(11) **EP 2 039 964 B1**
(45) Veröffentlichungstag und Bekanntmachung des Hinweises auf die Patenterteilung: **04.08.2010**
(21) Anmeldenummer: 08016521.0
(22) Anmeldetag: 19.09.2008
(51) Int. Cl.: F16H 61/00, B01D 29/01, B01D 29/05, B29D 99/00, F16J 15/10

(54) **Separatorplatte mit aufgeschmolzenem Filtermaterial**
Separator board with filter material welded thereto
Plaque de séparateur avec de matériau filtrant soudé au-dessus

(30) Priorität: 19.09.2007 EP 07018358
(43) Veröffentlichungstag der Anmeldung: 25.03.2009
(73) Patentinhaber: Carl Freudenberg KG, 69469 Weinheim (DE)
(72) Erfinder: Kohn, Jason, 68542 Heddesheim (DE); Kokoszynski, Wojciech, 68159 Mannheim (DE); Trabert, Jens, 69469 Weinheim (DE); Teytaud, Jean-Louis, 97140 Vaulry (FR)

(56) Entgegenhaltungen:
- EP-A- 0 803 654
- EP-A- 1 121 971
- EP-A- 1 862 207
- WO-A-91/11248
- JP-A- 8 229 312
- US-A1- 2003 196 750

## Beschreibung

### Technisches Gebiet

Die Erfindung betrifft eine Separatorplatte gemäß dem Oberbegriff des Patentanspruchs 1.

### Stand der Technik

Aus der EP 0 803 654 A ist eine Separatorplatte bekannt, welche Elastornerwülste aufweist.

Separatorplatten der eingangs genannten Art sind aus dem Stand der Technik bereits bekannt. Diese dienen der Abtrennung, Abdichtung und fluidleitenden Verbindung von Kanalsystemen hydraulischer Steuereinheiten. Diese Steuereinheiten können bei der Steuerung von Automatikgetrieben in Kraftfahrzeugen Verwendung finden.

Üblicherweise besteht eine hydraulische Steuereinheit aus einer Steuerhälfte und einer Aktorhälfte, die durch eine Separatorplatte getrennt sind. Sowohl die Steuerhälfte als auch die Aktorhälfte weisen labyrinthartige Kanalsysteme auf, die der Fluidleitung und definierten Ansteuerung von Getriebeteilen dienen. Die Kanalsysteme liegen einander gegenüber und sind nicht deckungsgleich ausgebildet. Vielmehr können durch die Position von Kolben in der Steuerhälfte einzelne Kanäle in der Steuerhälfte freigegeben und dadurch Fluid aus Kanälen der Steuerhälfte in definierte Kanäle der Aktorhälfte verbracht werden.

Das Fluid, üblicherweise ein Öl, tritt durch freigegebene Durchgänge in der Separatorplatte in definierte Kanäle der Aktorhälfte ein und kann dadurch hydraulisch nachgelagerte Getriebeteile betätigen.

Die gattungsbildenden Separatorplatten weisen einen sandwichartigen Aufbau auf, bei dem zwei Dichtungslagen eine Grundplatte und eine Filterlage zwischen sich einschließen.

Die Fertigung der gattungsbildenden Separatorplatten ist aufwendig, fehleranfällig und teuer, da relativ viele Einzelteile, nämlich mehrere ebene Lagen, zuverlässig dichtend miteinander verbunden werden müssen. Des Weiteren weisen die gattungsbildenden Separatorplatten eine relativ große Dicke auf, weshalb sie den Einbauverhältnissen in modernen Kraftfahrzeugen häufig nicht gerecht werden.

Das Filtermaterial ist häufig mittels einer Haftschicht mit der Grundplatte verbunden. Eine Haftschicht, insbesondere ein Klebstoffe, erlaubt eine ebene und flache Anlage des Filtermaterials auf der Grundplatte, Hierdurch können abstehende Ecken des Filtermaterials vermieden werden, an denen das aggressive Fluid angreifen und das Filtermaterial zusammen mit dem zweiten Dichtmaterial ablösen kann.

Bei der Verwendung von Klebstoffen treten allerdings erhebliche Nachteile auf. Manche Klebstoffe sind relativ teuer und können häufig nur unter Entstehung hoher Montagekosten verarbeitet werden. Des Weiteren können einige Klebstoffe selbst chemisch aggressiv wirken und das Filtermaterial angreifen und schädigen. Daher können mit Klebstoff behaftete Filtermaterialien nur unter besonderer Sorgfalt verarbeitet werden und sind für Massenfertigungsprozesse häufig nur wenig geeignet.

Auch wenn das zweite Dichtmaterial auf das Filtermaterial aufgetragen wird, können sich Probleme ergeben. Beim Auftragen kann das Filtermaterial relativ zu den Durchgängen der Grundplatte in unerwünschter Weise derart verschoben werden, dass die Durchgänge in der Grundplatte nicht mehr mit den Öffnungen im Filtermaterial korrespondieren.

### Darstellung der Erfindung

Der Erfindung liegt daher die Aufgabe zu Grunde, eine Separatorplatte der eingangs genannten Art derart auszugestalten und weiterzubilden, dass nach materialschonender Fertigung ein verschiebefreier und fester Verbund zwischen der Grundplatte und dem Filtermaterial besteht, wobei das Filtermaterials eben und flach auf der Grundplatte aufliegt.

Erfindungsgemäß wird die voranstehende Aufgabe mit den Merkmalen des Patentanspruchs 1 gelöst.

Danach ist eine Separatorplatte der eingangs genannten Art dadurch gekennzeichnet, dass das Filtermaterial auf die Grundplatte an- oder aufgeschmolzen ist, wobei das Filtermaterial lediglich in aufgeschmolzenen Zonen mit der Grundplatte verschweisst ist und wobei die aufgeschmolzenen Zonen auf Zungen positioniert sind, die von der Peripherie der Grundplatte abragen.

Die Aufgabe wird überraschenderweise dadurch gelöst, dass das Filtermaterial auf die Grundplatte an- oder aufgeschmolzen wird. Nach Ablegen des Filtermaterials auf der Grundplatte wird das Filtermaterial derart auf- oder angeschmolzen, dass es einen festen Verbund mit der Grundplatte eingeht. Während des Schmelzprozesses wird das Filtermaterial auf die Grundplatte durch die thermische Beaufschlagung aufgeklebt oder aufgeschweisst. In diesem Fall kann überraschend auf eine Haftschicht aus Klebstoff zwischen Grundplatte und Filtermaterial verzichtet werden, wobei trotzdem ein fester und ebener Verbund des Filtermaterials mit der Grundplatte gegeben ist.

Das Filtermaterial ist lediglich in aufgeschmolzenen Zonen mit der Grundplatte verschweisst. Hierdurch wird eine Wellenbildung im Filtermaterial durch thermische Beaufschlagung weitgehend verhindert. Die aufgeschmolzenen Zonen sind dabei gegenüber den nicht aufgeschmolzenen Bereichen des Filtermaterials abgeplattet.

Die aufgeschmolzenen Zonen sind auf Zungen positioniert, die von der Peripherie der Grundplatte abragen. Hierdurch nehmen die aufgeschmolzenen Zonen nicht am Abdichtprozess teil, den sie aufgrund ihrer verminderten Dicke stören könnten.

Folglich ist die eingangs genannte Aufgabe gelöst.

Man erkennt, dass das Filtermaterial durch ein Schmelzverfahren auf die Grundplatte aufgetragen wurde, wenn einzelne Poren des Filtermaterials durch verschmelzen verschlossen sind oder wenn das Filtermaterial abgeflachte aufgeschmolzene Zonen aufweist.

Das zweite Dichtmaterial könnte zumindest teilweise in das Filtermaterial integriert sein. Eine teilweise Integration und damit Kombination des Filtermaterials mit dem Dichtmaterial erlaubt, die Dicke der Separatorplatte wesentlich zu verringern. Des Weiteren wird die Stabilität der Platte erhöht, indem weniger Einzelteile eingesetzt werden, die sich von der Grundplatte ablösen können. Insbesondere werden weniger Dichtebenen geschaffen, an denen aggressive Fluide angreifen und die Separatorplatte schädigen können. Schließlich bildet eine formschlüssige oder stoffschlüssige Verbindung von Dichtmaterial und Filtermaterial eine feste Einheit aus Dichtmaterial und Filtermaterial aus.

Das zweite Dichtmaterial könnte siebdrucktechnisch auf das Filtermaterial aufgetragen sein. Hierdurch ist ein besonders dünner flächiger Auftrag des zweiten Dichtungsmaterials auf das Filtermaterial möglich. Auch das erste Dichtmaterial kann siebdrucktechnische auf die Grundplatte aufgebracht sein.

Durch ein Siebdruckverfahren können problemlos Rippenstrukturen geschaffen werden.

Das Filtermaterial könnte als Gebilde aus Fäden oder Drähten ausgebildet sein. Hierdurch kann eine Maschen- oder Porenstruktur einstellbarer Maschenweite geschaffen werden, durch die Metallspäne oder Verunreinigungen des Fluids zurückgehalten werden können. Vor diesem Hintergrund ist denkbar, das Gebilde als Gitter, Gewebe oder Gewirke auszugestalten. Die Fäden oder Drähte könnten aus Edelstahl, Nylon oder Polyester gefertigt sein. Diese Materialien haben sich als besonders resistent gegen aggressive Fluide wie ATF-Öle (Automatic Transmission Fluid) erwiesen und lassen sich dennoch gut aufschmelzen.

Das zweite Dichtmaterial könnte das Gebilde zumindest teilweise ausfüllen bzw. durchdringen. Hierdurch ist sichergestellt, dass das Dichtmaterial eine innige formschlüssige und/ oder stoffschlüssige Verbindung mit den Drähten oder Fäden des Gebildes eingeht und zugleich das Gebilde mit der Grundplatte fest verbinden kann. Die Durchgänge in der Separatorplatte, durch die das Fluid von der Steuerhälfte zur Aktorhälfte strömt, sind frei von zweitem Dichtmaterial. In den Durchgängen hält Filtermaterial Verunreinigungen zurück.

Das zweite Dichtmaterial könnte die Fäden oder Drähte des Gebildes umhüllen. Hierdurch ist sichergestellt, dass das zweite Dichtmaterial eine Dichtwirkung zur Aktorhälfte ausbilden kann und an der Grundplatte anliegt, um mit diesem eine stoffschlüssige Verbindung einzugehen. Des Weiteren wird das Filtermaterial vor dem Angriff durch aggressive Fluide geschützt.

Das erste und/ oder das zweite Dichtmaterial könnte als Elastomer ausgebildet sein. Elastomere sind elastisch deformierbar und können geringe Unebenheiten an abzudichtenden Flächen ausgleichen. Des Weiteren können sie mit Grundplatten aus metallischen Werkstoffen ein feste Verbindung eingehen. Vor diesem Hintergrund ist denkbar, dass die Grundplatte aus Aluminium oder Edelstahl besteht. Eine kostengünstige Grundplatte könnte jedoch auch aus Kunststoff bestehen.

Das Filtermaterial könnte als Gebilde aus Fäden oder Drähten ausgebildet sein, wobei die der Grundplatte abgewandte Seite des Gebildes als Dichtmaterial ausgebildet ist. Hierdurch ist eine sehr dünne Separatorplatte realisierbar, bei der eine Seite des Filtermaterials zugleich als Dichtmaterial oder Dichtbereich wirkt. Das Filtermaterial könnte derart angeschmolzen werden, dass außer im Bereich der Durchgänge alle Poren oder Maschen verschlossen werden. Die verschmolzenen Bereiche des Filtermaterials dienen dann als Dichtmaterial. Der Prozess des Anschmelzens kann nach dem festen Verbinden des Filtermaterials mit der Grundplatte, aber auch gleichzeitig erfolgen, indem nämlich das Filtermaterial durch das Anschmelzen zugleich auf die Grundplatte auf- oder angeschweisst wird. In jedem Fall kann auf eine Haftschicht aus Klebstoff zwischen Grundplatte und Filtermaterial verzichtet werden.

Die Durchgänge in der Separatorplatte dienen dem Fluidaustausch zwischen den Kanalsystemen der Steuerhälfte und der Aktorhälfte einer hydraulischen Steuereinheit. In den Durchgängen befindet sich Filtermaterial.

In dem ersten und/ oder dem zweiten Dichtmaterial könnte jeweils ein Kanalsystem ausgebildet sein. Diese Kanalsysteme könnten mit den labyrinthartigen Kanalsystemen der Steuerhälfte und der Aktorhälfte korrespondieren. Hierdurch kann eine besonders gute Fluidleitung durch Kanäle relativ großen Querschnitts gewährleistet werden. Die Kanalsysteme könnten durch ein Dichtmaterial aus Elastomerrippen gebildet sein. Elastomere legen sich aufgrund ihrer Elastizität problemlos dichtend an Oberflächen an.

Die Separatorplatte könnte eine Dicke von höchstens 2,2 mm aufweisen. Diese äußerst geringe Dicke erlaubt den Einbau der Separatorplatte in modernen Kraftfahrzeugen, in denen für hydraulische Steuereinheiten nur ein sehr knapper Bauraum zur Verfügung steht.

Die Grundplatte könnte aus einem Metall gefertigt sein und mit dem Filtermaterial ohne Haftvermittler verbunden sein. Hierdurch können aufwendige Arbeitsschritte wie das Auftragen eines Haftvermittlers eingespart werden. Des Weiteren ist kein Haftvermittler vorhanden, der die Anbindung eines später aufgebrachten Dichtmaterials chemisch stören kann.

Ein Verfahren zur Herstellung einer hier beschriebenen Separatorplatte könnte die folgenden Schritte umfassen: Bereitstellen einer Grundplatte und eines Filtermaterials, Aufeinanderlegen der Grundplatte und des Filtermaterials, zonales, verrutschfestes Verbinden der Grundplatte mit dem Filtermaterials durch an- oder aufschmelzen des Filtermaterials auf die Grundplatte. Hierdurch kann auf ein Haftmittel zwischen Filtermaterial und Grundplatte verzichtet werden.

Das Filtermaterial könnte durch ein elektrisches Induktionsverfahren auf- oder angeschmolzen werden. Hierdurch wird eine Wellenbildung im Filtermaterial durch thermische Beaufschlagung weitgehend verhindert, da das Filtermaterial nur zonal erhitzt wird.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine fotografische Ansicht einer Separatorplatte mit einer metallischen Grundplatte, auf die ein Filtermaterial aufgeschweisst ist, welches von einem zweiten Dichtmaterial bedeckt ist,
- Fig. 2: eine skizzierte Ansicht der Separatorplatte gemäß Fig. 1 mit einer metallischen Grundplatte, auf die ein Filtermaterial aufgeschweisst ist, welches von einem zweiten Dichtmaterial bedeckt ist,
- Fig. 3: die Rückansicht der Separatorplatte gemäß Fig. 2, mit einem ersten Dichtmaterial,
- Fig. 4: die metallische Grundplatte mit Durchgängen, die in den Separatorplatten gemäß den Fig. 1 bis 3 verwendet wurde, und
- Fig. 5: eine perspektivische Ansicht der Separatorplatte gemäß Fig. 2 und 3.

### Ausführung der Erfindung

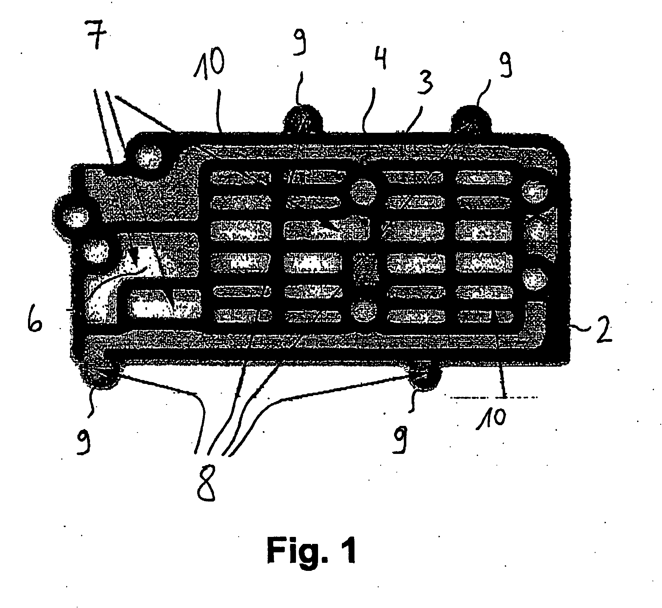

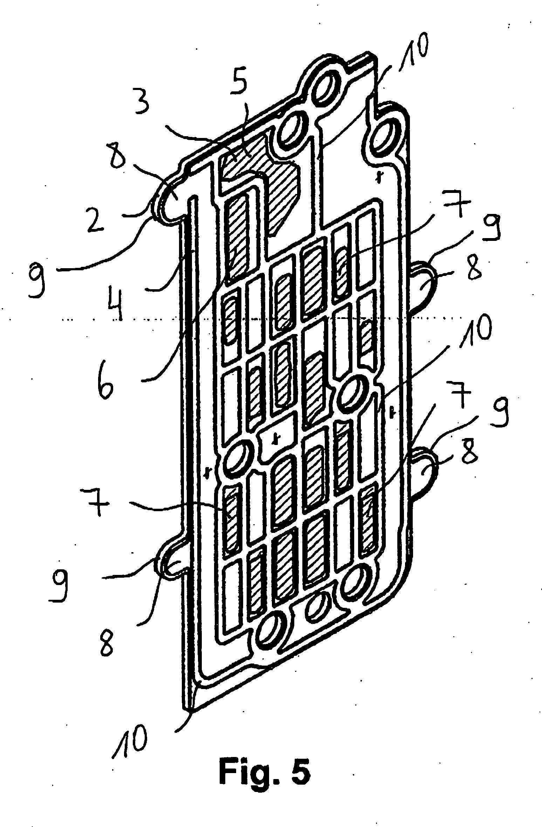

Die Fig. 1 bis 3 und Fig. 5 zeigen jeweils eine Separatorplatte für die Abdichtung und Verbindung von Kanalsystemen einer hydraulischen Steuereinheit. Die Separatorplatte weist ein erstes Dichtmaterial 1, eine Grundplatte 2 und ein Filtermaterial 3 zur Filterung eines Fluids auf, wobei die Grundplatte 2 zwischen dem ersten Dichtmaterial 1 und dem Filtermaterial 3 positioniert ist und wobei der Grundplatte 2 filterseitig ein zweites Dichtmaterial 4 zugeordnet ist. Das zweite Dichtmaterial 4 ist zumindest teilweise in das Filtermaterial 3 integriert, nämlich durch ein Siebdruckverfahren aufgebracht. Das erste Dichtmaterial 1 und das zweite Dichtmaterial 4 umfassen Elastomerrippen 10, die ein Kanalsystem ausbilden. Das Filtermaterial 3 ist als Gebilde 5 aus Fäden oder Drähten 6 ausgebildet.

Die Separatorplatte der Fig. 1 bis 3 und Fig. 5 weist Durchgänge 7 zum Fluidaustausch zwischen den Kanalsystemen von Steuerhälfte und Aktorhälfte einer hydraulischen Steuereinheit auf. Die Separatorplatte weist eine Dicke von höchstens 2,2 mm auf.

Fig. 1 zeigt ein Foto einer Separatorplatte, bei der das Filtermaterial 3 mittels aufgeschmolzenen Zonen 8 mit der Grundplatte 2 verbunden ist. Fig. 1 zeigt eine Separatorplatte, bei der das zweite Dichtmaterial 4 siebdrucktechnisch auf das Filtermaterial 3 aufgetragen ist. Das zweite Dichtmaterial 4 umfasst Elastomerrippen 10, die ein Kanalsystem ausbilden.

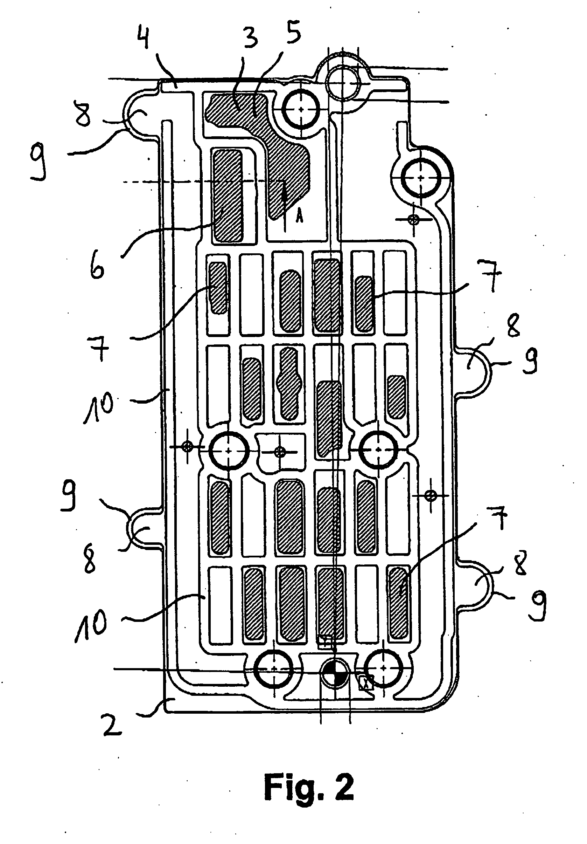

Sowohl in Fig. 1 als auch in den Fig. 2, 3 und 5 füllt das zweite Dichtmaterial 4 das Gebilde 5 zumindest teilweise aus, wobei das zweite Dichtmaterial 4 die Fäden oder Drähte 6 des Gebildes 5 formschlüssig und stoffschlüssig umhüllt. Das zweite Dichtmaterial 4 besteht aus einem Elastomer.

Fig. 2 ist eine skizzierte Ansicht der Separatorplatte gemäß Fig. 1 mit einer metallischen Grundplatte 2, auf die ein Filtermaterial 3 aufgeschweisst ist, welches von einem zweiten Dichtmaterial 4 bedeckt ist. Das Filtermaterial 3 ist nur abschnittsweise im Bereich der Durchgänge 7 gezeichnet dargestellt.

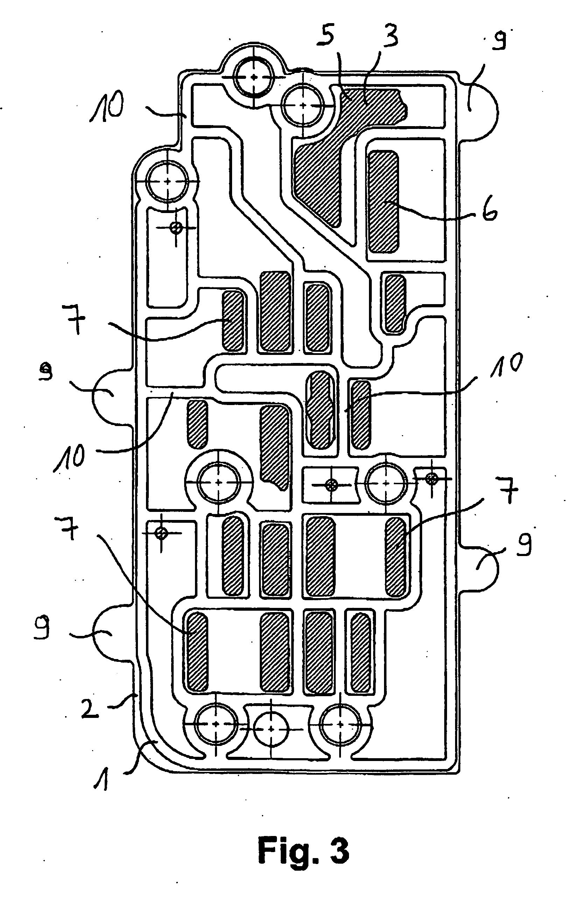

Fig. 3 zeigt die Rückansicht der Separatorplatte gemäß Fig. 2, mit einem ersten Dichtmaterial 1. Das erste Dichtmaterial 1 umfasst Elastomerrippen 10, die ein Kanalsystem ausbilden.

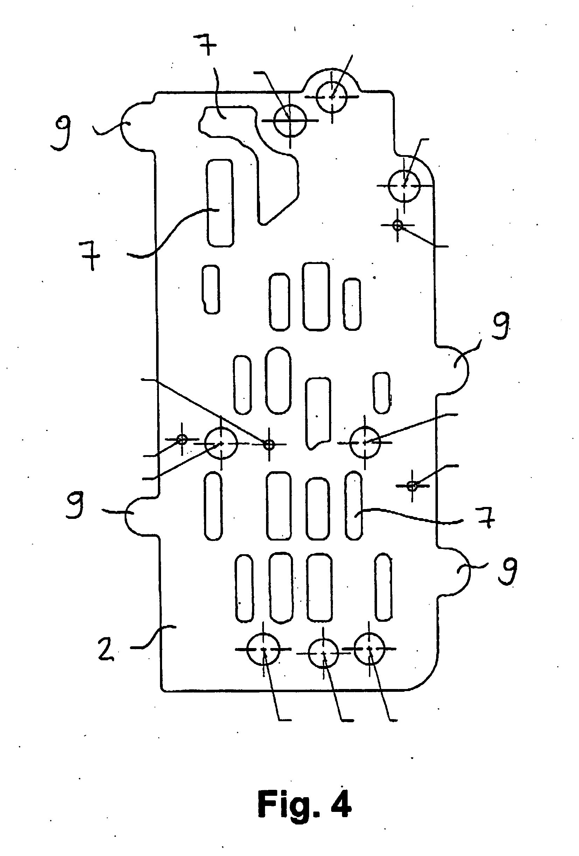

Fig. 4 zeigt eine metallische Grundplatte 2, in die Durchgänge 7 eingestanzt sind. Die Grundplatte 2 zeigt in allen Figuren Zungen 9, die von der Peripherie der Grundplatte 2 abragen. Auf diesen Zungen 9 sind die aufgeschmolzenen Zonen 8 des Filtermaterials 3 angeordnet, welche die feste haftschichtfreie Verbindung des Filtermaterials 3 mit der metallischen Grundplatte 2 herstellen.

Eine Separatorplatte gemäß den Fig. 1 bis 3 und Fig. 5 kann nach folgendem Verfahren gefertigt werden:

Zunächst werden eine metallische Grundplatte 2 und das Filtermaterial 3 unabhängig voneinander gefertigt und vorbereitet. Insbesondere wird die Grundplatte 3 mit Durchgängen 7 versehen. Dies kann durch Stanzen erfolgen. Das Filtermaterial 3 wird der Form der abzudichtenden Oberfläche angepasst. Dies kann durch Zuschneiden erfolgen.

Darauf werden die Grundplatte 2 und das Filtermaterial 3 in einem Fertigungswerkzeug aufeinandergelegt. Das Fertigungswerkzeug ist mit Stiften versehen, welche die Grundplatte 2 und das Filtermaterial 3 verschiebesicher aneinanderdrücken. Die Grundplatte 2 und das Filtermaterial 3 werden somit in exakter relativer Lage zueinander fixiert.

Darauf wird das Fertigungswerkzeug geschlossen, indem ein Oberteil in Kontakt mit einem Unterteil verbracht wird. Hierbei werden die Grundplatte 2 und das Filtermaterial 3 zwischen dem Oberteil und dem Unterteil liegend aneinandergepresst. Um Falten im Filtermaterial 3 zu vermeiden, weisen das Oberteil und das Unterteil eine ähnliche geometrische Form auf wie das Filtermaterial 3 und die Grundplatte 2. Hierdurch wird das Filtermaterial 3 flach gehalten, wenn das Oberteil und das Unterteil zusammengebracht werden.

Um das Filtermaterial 3 aufzuschmelzen, ist das Fertigungswerkzeug mit Heizzonen versehen. Die Heizzonen können lokal in kurzer Zeit hohe Temperaturen erzeugen. Bevorzugt kommen Induktionsheizungen zum Einsatz.

Besonders vorteilhaft wird das Filtermaterial 3 durch das hier beschriebene Verfahren in den aufgeschmolzenen Zonen 8 abgeplattet. Das Filtermaterial 3 ist in den aufgeschmolzenen Zonen 8 dünner als in den nicht aufgeschmolzenen Bereichen.

Daher können die aufgeschmolzenen Zonen 8 auch innerhalb oder außerhalb der befestigten Fläche des Filtermaterials 3 liegen. Insbesondere können die aufgeschmolzenen Zonen 8 auch außerhalb der abzudichtenden Oberflächen liegen, die der Aktorhälfte oder der Steuerhälfte zugewandt sind.

Beispeilsweise können die aufgeschmolzenen Zonen 8 auf Zungen 9 der Grundplatte 2 liegen, die von deren Peripherie abragen. Günstigerweise werden die Dicht- und Filterfunktionen der Separatorplatte durch die aufgeschmolzenen Zonen 8 und deren optionale Positionierung nicht beeinträchtigt, da diese keine Dickenerhöhung des Filtermaterials 3 bewirken und die Elastomerrippen 10 somit nicht bereichsweise überragen können.

Sobald das Filtermaterial 3 auf der Grundplatte 2 befestigt ist, kann der so entstandene Rohling problemlos bewegt und weiterverarbeitet werden. Eine Verschiebung des Filtermaterials 3 relativ zur Grundplatte 2 ist nicht zu befürchten. Daher kann auch problemlos siebdrucktechnisch zweites Dichtmaterial 4 aufgebracht werden, ohne dass das Filtermaterial 3 relativ zur Grundplatte 2 verschoben wird.

Das Verfahren kann besonders problemlos und schnell durchgeführt werden, wenn für die Grundplatte 2 ein metallisches Material gewählt wird, welches eine induktive Erwärmung der Grundplatte 2 zulässt. Das Filtermaterial 3 wird aus einem Stoff gefertigt sein, der mit dem gewählten Metall eine feste Verbindung beim Aufschmelzen eingeht, beispielsweise synthetische Polymere, insbesondere Polyester. Überraschenderweise gehen Polyester allein durch Aufschmelzen mit einigen Metallen eine feste Haftverbindung ein. Eine Haftschicht zwischen dem Polyester und dem Metall ist nicht notwendig.

Ein besonders vorteilhafter Effekt des zuvor beschriebenen Verfahrens ist die lediglich lokale Erhitzung der Grundplatte 2 und des Filtermaterials 3 in den aufgeschmolzenen Zonen 8. Der Rest der Grundplatte 2 und des Filtermaterials 3 werden nur mit sehr geringer Wärme beaufschlagt, welche diese nicht schädigt. Das Verfahren ist daher besonders materialschonend.

Durch die geringe Wärmebeaufschlagung des Filtermaterials 3 wird dieses auch nicht wellig, sondern bleibt auch in Bereichen flach und eben, die nicht unmittelbar an der Grundplatte 2 haften.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass das zuvor ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Separatorplatte für die Abdichtung und Verbindung von Kanalsystemen einer hydraulischen Steuereinheit, mit einem ersten Dichtmaterial (1), einer Grundplatte (2) und einem Filtermaterial (3) zur Filterung eines Fluids, wobei die Grundplatte (2) zwischen dem ersten Dichtmaterial (1) und dem Filtermaterial (3) positioniert ist und wobei der Grundplatte (2) filterseitig ein zweites Dichtmaterial (4) zugeordnet ist,
**dadurch gekennzeichnet, dass** das Filtermaterial (3) auf die Grundplatte (2) an- oder aufgeschmolzen ist, wobei das Filtermaterial (3) lediglich in aufgeschmolzenen Zonen (8) mit der Grundplatte (2) verschweisst ist und wobei die aufgeschmolzenen Zonen (8) auf Zungen (10) positioniert sind, die von der Peripherie der Grundplatte (2) abragen.

2. Separatorplatte nach Anspruch 1, **dadurch gekennzeichnet, dass** das zweite Dichtmaterial (4) zumindest teilweise in das Filtermaterial (3) integriert ist.

3. Separatorplatte nach Anspruch 1 oder 2, **dadurch gekennzeichnet, dass** das zweite Dichtmaterial (4) siebdrucktechnisch auf das Filtermaterial (3) aufgetragen ist.

4. Separatorplatte nach einem der Ansprüche 1 bis 3, **dadurch gekennzeichnet, dass** das Filtermaterial (3) als Gebilde (5) aus Fäden oder Drähten (6) ausgebildet ist.

5. Separatorplatte nach Anspruch 4, **dadurch gekennzeichnet, dass** das zweite Dichtmaterial (4) das Gebilde (5) zumindest teilweise ausfüllt.

6. Separatorplatte nach Anspruch 4 oder 5, **dadurch gekennzeichnet, dass** das zweite Dichtmaterial (4) die Fäden oder Drähte (6) des Gebildes (5) umhüllt.

7. Separatorplatte nach einem der Ansprüche 1 bis 6, **dadurch gekennzeichnet, dass** das erste und/ oder das zweite Dichtmaterial (1, 4) als Elastomer ausgebildet ist.

8. Separatorplatte nach Anspruch 1, **dadurch gekennzeichnet, dass** das Filtermaterial (3) als Gebilde (5) aus Fäden oder Drähten (6) ausgebildet ist, wobei die der Grundplatte (2) abgewandte Seite des Gebildes (5) als Dichtmaterial (4) ausgebildet ist

9. Separatorplatte nach einem der Ansprüche 1 bis 8, **gekennzeichnet durch** Durchgänge (7) zum Fluidaustausch.

10. Separatorplatte nach einem der Ansprüche 1 bis 9, **dadurch gekennzeichnet, dass** im ersten und/ oder zweiten Dichtmaterial (1, 4) ein Kanalsystem ausgebildet ist.

11. Separatorplatte nach einem der Ansprüche 1 bis 10, **dadurch gekennzeichnet, dass** die Grundplatte (2) aus einem Metall gefertigt ist und mit dem Filtermaterial (3) ohne Haftvermittler verbunden ist.

12. Verfahren zur Herstellung einer Separatorplatte nach einem der voranstehenden Ansprüche, umfassend die folgende Schritte:
Bereitstellen einer Grundplatte (2) und eines Filtermaterials (3), Aufeinanderlegen der Grundplatte (2) und des Filtermaterials (3), zonales, verrutschfestes Verbinden der Grundplatte (2) mit dem Filtermaterial (3) durch an- oder aufschmelzen des Filtermaterials (3) auf die Grundplatte (2).

13. Verfahren nach Anspruch 12, **dadurch gekennzeichnet, dass** das Filtermaterial (3) durch ein elektrisches induktionsverfahren auf- oder angeschmolzen wird.

## Claims

1. Separator plate for sealing and connecting systems of channels of a hydraulic control unit, with a first sealing material (1), a base plate (2) and a filter material (3) for filtering a fluid, the base plate (2) being positioned between the first sealing material (1) and the filter material (3) and the base plate (2) being assigned a second sealing material (4) on the filter side, **characterized in that** the filter material (3) is fused or partly fused onto the base plate (2), the filter material (3) only being welded to the base plate (2) in fused zones (8), and the fused zones (8) being positioned on tongues (10) which protrude from the periphery of the base plate (2).

2. Separator plate according to Claim 1, **characterized in that** the second sealing material (4) is at least partially integrated in the filter material (3).

3. Separator plate according to Claim 1 or 2, **characterized in that** the second sealing material (4) is applied to the filter material (3) by a screen printing technique.

4. Separator plate according to one of Claims 1 to 3, **characterized in that** the filter material (3) is formed as a structure (5) of filaments or wires (6).

5. Separator plate according to Claim 4, **characterized in that** the second sealing material (4) at least partially fills the structure (5).

6. Separator plate according to Claim 4 or 5, **characterized in that** the second sealing material (4) envelops the filaments or wires (6) of the structure (5).

7. Separator plate according to one of Claims 1 to 6, **characterized in that** the first and/or second sealing material (1, 4) is formed as an elastomer.

8. Separator plate according to Claim 1, **characterized in that** the filter material (3) is formed as a structure (5) of filaments or wires (6), the side of the structure (5) that is facing away from the base plate (5) being formed as sealing material (4).

9. Separator plate according to one of Claims 1 to 8, **characterized by** passages (7) for fluid exchange.

10. Separator plate according to one of Claims 1 to 9, **characterized in that** a system of channels is formed in the first and/or second sealing material (1, 4).

11. Separator plate according to one of Claims 1 to 10, **characterized in that** the base plate (2) is produced from a metal and is connected to the filter material (3) without a bonding agent.

12. Method for producing a separator plate according to one of the preceding claims, comprising the following steps:
providing a base plate (2) and a filter material (3).
placing the base plate (2) and the filter material (3) one on top of the other,
zonally connecting the base plate (2) to the filter material (3) in a nonslip manner by fusing or partly fusing the filter material (3) onto the base plate (2).

13. Method according to Claim 12, **characterized in that** the filter material (3) is fused or partly fused by an electrical induction process.

## Revendications

1. Plaque de séparateur pour l'étanchéité et la liaison de systèmes de conduit d'une unité de commande hydraulique, comprenant un premier matériau d'étanchéité (1), une plaque de base (2) et un matériau filtrant (3) pour le filtrage d'un fluide, la plaque de base (2) étant positionnée entre le premier matériau d'étanchéité (1) et le matériau filtrant (3), et un second matériau d'étanchéité (4) étant attribué côté filtre à la plaque de base (2),
**caractérisée en ce que** le matériau filtrant (3) est fondu sur la plaque de base (2), le matériau filtrant (3) étant soudé uniquement dans des zones (8) fondues dessus avec la plaque de base (2) et les zones (8) fondues dessus étant positionnées sur des languettes (10), qui dépassent de la périphérie de la plaque de base (2).

2. Plaque de séparateur selon la revendication 1, **caractérisée en ce que** le second matériau d'étanchéité (4) est intégré au moins en partie dans le matériau filtrant (3).

3. Plaque de séparateur selon la revendication 1 ou 2, **caractérisée en ce que** le second matériau d'étanchéité (4) est appliqué par sérigraphie sur le matériau filtrant (3).

4. Plaque de séparateur selon l'une quelconque des revendications 1 à 3, **caractérisée en ce que** le matériau filtrant (3) est conçu sous forme de structure (5) à base de fils ou de fils métalliques (6).

5. Plaque de séparateur selon la revendication 4, **caractérisée en ce que** le second matériau d'étanchéité (4) remplit au moins en partie la structure (5).

6. Plaque de séparateur selon la revendication 4 ou 5, **caractérisée en ce que** le second matériau d'étanchéité (4) enveloppe les fils ou fils métalliques (6) de la structure (5).

7. Plaque de séparateur selon l'une quelconque des revendications 1 à 6, **caractérisée en ce que** le premier et/ou le second matériau d'étanchéité (1, 4) est/sont conçu(s) comme élastomère.

8. Plaque de séparateur selon la revendication 1, **caractérisée en ce que** le matériau filtrant (3) est conçu sous forme de structure (5) à base de fils ou de fils métalliques (6), le côté, opposé à la plaque de base (2), de la structure (5) étant conçu sous forme de matériau d'étanchéité (4).

9. Plaque de séparateur selon l'une quelconque des revendications 1 à 8, **caractérisée par** des passages (7) pour l'échange de fluides.

10. Plaque de séparateur selon l'une quelconque des revendications 1 à 9, **caractérisée en ce qu'**un système de conduit est réalisé dans le premier et/ou le second matériau d'étanchéité (1, 4).

11. Plaque de séparateur selon l'une quelconque des revendications 1 à 10, **caractérisée en ce que** la plaque de base (2) est fabriquée dans un métal et est reliée sans agent adhésif au matériau filtrant (3).

12. Procédé pour fabriquer une plaque de séparateur selon l'une quelconque des revendications précédentes, comprenant les étapes suivantes :
mise à disposition d'une plaque de base (2) et d'un matériau filtrant (3), pose de la plaque de base (2) et du matériau filtrant (3) l'un sur l'autre, liaison zonale et résistant en glissement de la plaque de base (2) avec le matériau filtrant (3) par fusion du matériau filtrant (3) sur la plaque de base (2).

13. Procédé selon la revendication 12, **caractérisé en ce que** le matériau filtrant (3) est fondu par un procédé d'induction électrique.
